Europäisches Patentamt

European Patent Office

Office européen des brevets

(11) Veröffentlichungsnummer: **0 125 442**
**A1**

(12) # EUROPÄISCHE PATENTANMELDUNG

(21) Anmeldenummer: 84103348.3

(22) Anmeldetag: 27.03.84

(51) Int. Cl.³: **C 22 C 33/02**
**F 16 C 33/12**

(30) Priorität: 14.04.83 DE 3313528

(43) Veröffentlichungstag der Anmeldung:
21.11.84 Patentblatt 84/47

(84) Benannte Vertragsstaaten:
DE FR GB IT

(71) Anmelder: ROBERT BOSCH GMBH
Postfach 50
D-7000 Stuttgart 1(DE)

(72) Erfinder: Rettberg, Adolf
Bauernkamp 10
D-4630 Bochum 7(DE)

(72) Erfinder: Rosiepen, Reinhold
Meesmannstrasse 74
D-5810 Witten 3(DE)

(72) Erfinder: Rühle, Walter
Blumhardtweg 1
D-7015 Korntal(DE)

(72) Erfinder: Zwilling, Reinhold
Gottfriedstrasse 9
D-4670 Lünen(DE)

(54) Lagerbuchsenwerkstoff.

(57) Es wird ein Werkstoff aus Sinterstahl mit einem Gehalt an Kupfer und Kohlenstoff angegeben, der zur Herstellung von Lagerbuchsen dient. Der Werkstoff besteht zu 79 bis 96% aus mit 0,6 Gew,-% Phosphor-vorlegiertem Eisen, 3 bis 20 Gew.-% Kupfer sowie 0,8 bis 1 Gew.-% Graphit. Gegenüber Lagerbuchsen aus den bisher verwendeten Werkstoffen weisen Lagerbuchsen aus diesem Werkstoff eine höhere radiale Bruchfestigkeit sowie eine geringe Neigung zur Verpastung durch ein Graphit-Öl-Gemisch auf, Eigenschaften, die gleichzeitig zu einer Verbesserung der Lebensdauer führen.

EP 0 125 442 A1

R. 18500
12.4.1983 Pf/Jä

ROBERT BOSCH GMBH, 7000 Stuttgart 1

Lagerbuchsenwerkstoff

Stand der Technik

Die Erfindung geht aus von einem Lagerbuchsenwerkstoff
nach der Gattung des Hauptanspruchs. Es sind Lagerbuchsenwerkstoffe aus Sinterstahl bekannt, die einen Kohlenstoffgehalt von 2 Gew.-% und einen Kupfergehalt von 18 - 22
Gew.-% haben. Diese Werkstoffe haben jedoch für manche
Verwendungsarten keine ausreichend hohe radiale Bruchfestigkeit, sie zeigen außerdem eine Neigung zur Verpastung durch ein Graphit-Öl-Gemisch, so daß derartige Lager vorzeitig ausfallen und ihre Lebensdauer damit begrenzt ist.

Vorteile der Erfindung

Der erfindungsgemäße Lagerwerkstoff mit den kennzeichnenden Merkmalen des Hauptanspruchs hat demgegenüber den
Vorteil, daß er eine höhere radiale Bruchfestigkeit aufweist, daß die Verpastungsneigung durch ein Graphit-Öl-
Gemisch sehr viel geringer ist und daß somit die Lebensdauer derartiger Lager verbessert werden konnte. Durch
den Zusatz von Phosphor und die Verringerung des Kohlenstoffgehalts in Form von Graphit von 2 auf maximal 1 %
wird die radiale Bruchfestigkeit um 100 bis 150 % gegenüber

...

0125442

R. 18500

dem obengenannten Lagerwerkstoff gesteigert. Gleichzeitig verringert sich durch die Herabsetzung des wegen der Notlaufeigenschaften vorhandenen Graphitgehalts die Neigung zur Verpastung von Öl und Graphit.

In dem Unteranspruch ist eine besonders vorteilhafte Zusammensetzung des Lagerwerkstoffs aufgeführt, die zu sehr guten Werten der radialen Bruchfestigkeit sowie zu einer besonders geringen Verpastungsneigung geführt hat.

Beschreibung eines Ausführungsbeispiels

79 Gewichtsteile Eisenpulver mit 0,6 Gew.-% Phosphor, 20 Gewichtsteile Kupferpulver, 1 Gewichtsteil Graphitpulver und 0,4 Gewichtsteile Gleitmittel als Preßhilfsmittel werden ca. 15 Minuten lang in einem Mischer gemischt. Dann wird das Pulver in einer Form auf eine Preßdichte von ca. 5,6 $g/cm^3$ gepreßt und der Preßling anschließend bei 1030 $^o$C unter Schutzgas gesintert. Nach dem Abkühlen wird der Formling in bekannter Weise zunächst mit Öl getränkt, kalibriert und schließlich im Vakuum mit Öl impragniert. Danach liegt die fertige Lagerbuchse vor, die eine radiale Bruchfestigkeit von mindestens 150 $N/mm^2$ aufweist, und die bezüglich der Verpastung von Öl und Graphit ein wesentlich besseres Verhalten aufweist als die Lagerbuchsen aus einem Werkstoff nach dem Stand der Technik.

R. 18500
12.4.1983 Pf/Jä

ROBERT BOSCH GMBH, 7000 Stuttgart 1


Ansprüche


1. Lagerbuchsenwerkstoff aus Sinterstahl mit einem Gehalt an Kupfer und Kohlenstoff, gekennzeichnet durch folgende Zusammensetzung:

Fe-P (mit 0,6 % P vorlegiert) 79   bis 97 %

Cu                            3   bis 20 %

C in Form von Graphit         0,8 bis 1 %

(Angaben in Gew.-%).


2. Lagerbuchsenwerkstoff nach Anspruch 1, gekennzeichnet durch folgende Zusammensetzung:

Fe-P (mit 0,6 % P vorlegiert) 79 %

Cu                            20 %

Graphit                        1 %

(Angaben in Gew.-%).

**0125442**

Nummer der Anmeldung

Europäisches Patentamt

# EUROPÄISCHER RECHERCHENBERICHT

EP  84 10 3348

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-4 238 221  (L.E. SEVENSSON)<br>* Ansprüche 3,6,9 * | 1,2 | C 22 C   33/02<br>F 16 C   33/12 |
| Y | DE-A-2 150 155  (TOYOTA)<br>*  Ansprüche   1-3;   Seite  11,<br>Tabelle Beispiel 10 * | 1,2 | |
| A | US-A-4 344 795  (H. ENDO et al.)<br>* Ansprüche 1,3,6 * | 1,2 | |
| A | GB-A-  491 415   (R. BOSCH AG) | | |
| A | US-A-1 974 173  (W.G. CALKINS) | | |
| A | DE-A-2 428 091   (TOYOTA) | | |

---

|   |   |
|---|---|
| | **RECHERCHIERTE SACHGEBIETE (Int. Cl. ³)** |
| | C 22 C<br>F 16 C   33/12 |

Der vorliegende Recherchenbericht wurde für alle Patentansprüche erstellt.

| Recherchenort<br>DEN HAAG | Abschlußdatum der Recherche<br>18-07-1984 | Prüfer<br>SCHRUERS H.J. |
|---|---|---|